# EUROPÄISCHE PATENTSCHRIFT

(11) **EP 1 172 234 B1**
(45) Veröffentlichungstag und Bekanntmachung des Hinweises auf die Patenterteilung: **07.04.2004**
(21) Anmeldenummer: 01116274.0
(22) Anmeldetag: 05.07.2001
(51) Int. Cl.: B60C 11/04, B60C 11/03

(54) **Landwirtschaftsreifen**
Agricultural tyre
Bandage pneumatique agricole

(30) Priorität: 06.07.2000 DE 10032373
(43) Veröffentlichungstag der Anmeldung: 16.01.2002
(73) Patentinhaber: Continental Aktiengesellschaft, 30165 Hannover (DE)
(72) Erfinder: Krieger, Ralf, 30559 Hannover (DE)

(56) Entgegenhaltungen:
- FR-A- 768 057
- GB-A- 755 137
- US-A- 5 375 640

## Beschreibung

Die Erfindung betrifft einen Landwirtschaftsreifen mit einer Lauffläche mit zwei Reihen von Stollen, die schräg zur Umfangsrichtung und zumindest im Wesentlichen V-förmig angeordnet sind und sich vom jeweiligen Laufflächenrand zumindest im Wesentlichen bis zur Laufflächenmitte erstrecken.

Landwirtschaftsreifen mit derartigen Stollenprofilen sind schon seit langem bekannt und üblich und werden insbesondere auf Ackerschleppem und sonstigen landwirtschaftlichen Maschinen als Traktionsreifen eingesetzt. Landwirtschaftsreifen mit Stollenprofilen sind auch immer wieder Gegenstand von Patentanmeldungen. So ist beispielsweise aus der deutschen Auslegeschrift 1 213 276 ein Schlepperreifen bekannt, bei dem zur Verbesserung der Selbstreinigung die im Bereich der Laufstreifenmitte gelegenen Stollenköpfe eine besondere Geometrie erhalten. Die EP-A1-0 795 427 befasst sich mit der Optimierung der Eigenschaften eines Landwirtschaftsreifens auf feuchtem und auf trockenem Untergrund. Dazu wird das Stollenprofil derart ausgelegt, dass der gegenseitige Abstand der einzelnen Stollen in Umfangsrichtung relativ groß gewählt wird und im Laufflächenmittelbereich zwischen den beiden Reihen von Stollen in Umfangsrichtung eine Art Kanal bestehen bleibt. Diese Maßnahmen verringern jedoch den Positivanteil der Lauffläche, also jenen Teil an der Gesamtfläche derselben, die beim Abrollen mit dem Untergrund in Kontakt tritt.

Aus der gattungsgemäßen US- A- 5,375,640 ist femer ein Landwirtschaftsreifen mit einem Stollenprofil bekannt, bei welchem die Stollen jeweils abschnittsweise mit seichten Rillen versehen sind. Die Oberseiten der Stollen sind daher durch eine Anzahl von an beiden Enden geschlossene Rillen strukturiert. Länger ausgeführte Rillen können ferner zusätzlich durch Versteifungsbrücken unterteilt sein. Der Zweck dieser pro Stollen in einer Anzahl vorgesehenen und aneinander gereihten Rillen ist, die Griffeigenschaften und somit die Traktion zu verbessern, wobei aber eine zu große Aufweichung der Stollen vermieden werden soll.

Insbesondere bei modernen Niederquerschnittsreifen in Radialbauart hat das Traktionspotential des Stollenprofils etwas an Bedeutung verloren. Wichtiger hingegen wird mehr und mehr die Eignung der Reifen für höhere Geschwindigkeiten auf Straßen und auf Grünland, insbesondere beim Einsatz auf Fahrzeugen mit einer Bauart bedingten höheren Höchstgeschwindigkeit. Soll ein Stollenprofil von seinen Gebrauchseigenschaften her für eine Straßen- und Grünlandeignung verbessert werden, ist der Positivanteil des Profils zu erhöhen. Dadurch bekommt man zwangsläufig massivere Stollen, die höhere Geschwindigkeiten auf Straßen nicht zulassen, da sie sich durch Hystereseverluste zu stark erwärmen, unkomfortabel abrollen und einen ungleichförmigen Abrieb aufweisen.

Hier setzt nun die Erfindung ein, der die Aufgabe zu Grunde liegt, ein Stollenprofil für einen Landwirtschaftsreifen derart zu gestalten, dass es eine bessere Eignung für den Einsatz bei höheren Geschwindigkeiten auf Straßen aber nach wie vor ein sehr gutes Traktionspotential für das Befahren von Grünland, von nachgiebigen Böden, aufweist.

Gelöst wird die gestellte Aufgabe erfindungsgemäß dadurch, dass in jedem Stollen eine vom Bereich des Stollenkopfes bis zum Laufflächenrand durchgehend verlaufende Rille ausgebildet ist, wobei entlang der Rille die Stollenbreite zumindest dem Zweifachen der Stollenhöhe entspricht.

Durch die in Stollenlängsrichtung verlaufenden Rillen werden die ansonsten zu massiv werdenden Stollen geteilt. Der zentrale Stollenbereich, der das thermische Zentrum des Stollens bildet, kann somit entschärft werden. Die Rillen lassen mechanisch entkoppelte, aber infolge des Verhältnisses der Stollenbreite zur Stollenhöhe stabile Stollenbereiche entstehen, was für den Abrollkomfort und das Abriebsverhalten von Vorteil ist. Die Rillen stellen zudem zusätzliche Kanten zur Verfügung, sodass die maximale Traktionskraft des Profils auf Grünland verbessert wird und die für Stollenprofile typische gute Traktion auf nachgiebigen Böden erhalten bleibt.

Bei einer bevorzugten Ausführungsform des Stollenprofils entspricht die Stollenbreite zumindest dem 2,2- fachen und bis zum Dreifachen der Stollenhöhe. Damit kann ein bezüglich der oben erwähnten Eigenschaften sehr ausgewogenes Stollenprofil geschaffen werden.

Nach einem weiteren Merkmal der Erfindung beträgt der Positivanteil der Lauffläche zwischen 20 und 50%, insbesondere mindestens 30%. Erfindungsgemäße Stollenprofile könne daher einen sehr hohen Positivanteil aufweisen, der das Profil für höhere Geschwindigkeiten auf normalen Straßen besonders geeignet macht.

Gemäß einer bevorzugten Ausführungsform der Erfindung münden die Rillen an den Laufstreifenrändern nach außen. Diese Maßnahme begünstigt das Ableiten von Schmutz und Wasser.

Für die Wirkung der Rillen ist es günstig, wenn diese eine gewisse Mindestlänge aufweisen. Optimal ist ein Bereich für die Länge der Rillen zwischen 70% und 100%, insbesondere bis zu 95%, der Stollenlänge.

Für die Stabilität der durch die Rillen strukturierten Stollen und demnach auch für einen möglichst gleichmäßigen Abrieb derselben ist es von Vorteil, wenn die Rillen jeweils entlang der zentralen Mittellinien der Stollen verlaufen. Die Rillen können jedoch innerhalb der Stollen auch außermittig verlaufen, wobei aus Gründen der Stabilität die Anordnung derart erfolgen sollte, dass die Mittellinien der Rillen den jeweiligen Stollen über seine Breite in einem Verhältnis von 30 zu 70 bis 70 zu 30 teilen.

Auch die Breite der Rillen hat einen Einfluß auf deren Wirkung. Werden die Rillen zu schmal ausgeführt, so ist ihre Wirkung gering, werden sie zu breit ausgeführt, könnte die Stabilität der Stollen beeinträchtigt werden. Die Breite der Rillen sollte demnach zwischen 15% und 40%, insbesondere zwischen 20% und 30%, der Breite der Stollen betragen. Der Laufflächenabrieb und die Stabilität der Stollen wird dann zusätzlich günstig beeinflusst, wenn die Breite der Rillen mit einer Änderung der Breite der Stollen gleichermaßen mitvariiert wird.

Die Tiefe der Rillen wird so gewählt, dass einer ungünstigen Erwärmung des Zentrums der Stollen entgegengewirkt wird. Dabei werden die Rillen insbesondere mit einer über den Großteil ihrer Länge zumindest im Wesentlichen konstanten Tiefe, die vorzugsweise bis zu 80% der Stollenhöhe beträgt, ausgeführt.

Weitere Merkmale, Vorteile und Einzelheiten der Erfindung werden nun anhand der Zeichnung, die ein Ausführungsbeispiel eines erfindungsgemäßen Reifens darstellt, näher beschrieben. Dabei zeigen
Fig. 1 eine Schrägansicht eines erfindungsgemäß ausgeführten Reifens und
Fig. 2 eine Frontansicht des Reifens aus Fig. 1.

In den Zeichnungsfiguren ist ein Ausführungsbeispiel eines erfindungsgemäß ausgeführten Radialreifens für landwirtschaftliche Einsatzzwecke, beispielsweise auf Ackerschleppern oder anderen landwirtschaftlich genutzten Fahrzeugen, dargestellt.

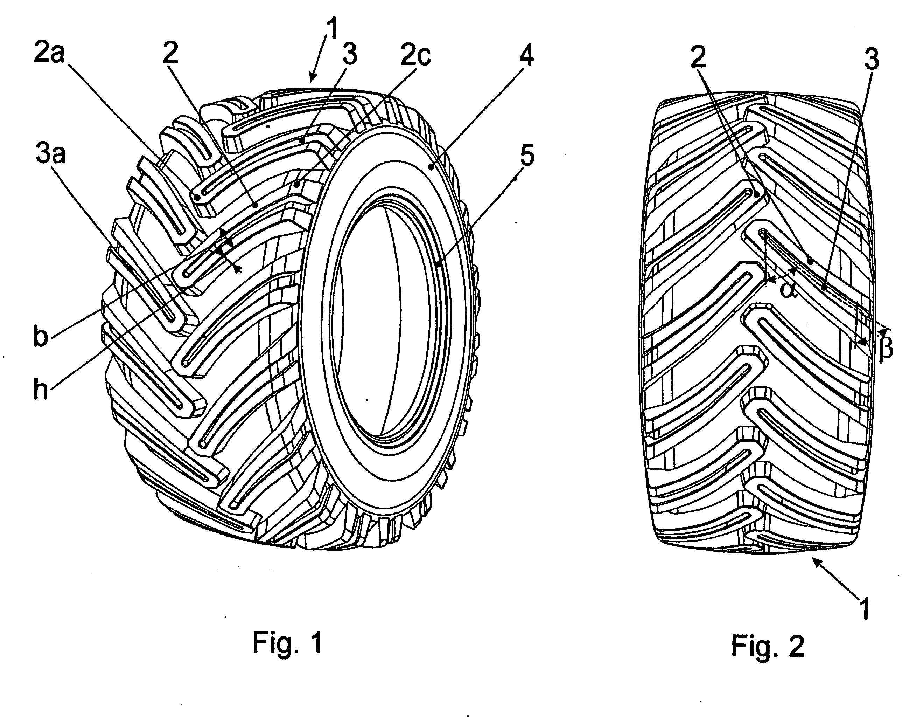

Die Schrägansicht in Fig. 1 lässt eine der Seitenwände 4, einen der Wulstbereiche 5 sowie die Lauffläche 1 erkennen, auf deren Ausgestaltung weiter unten näher eingegangen wird. Der dargestellte Reifen kann einen für derartige Reifen üblichen Aufbau und Unterbau aufweisen. Da die betreffenden Bauteile nicht Gegenstand der Erfindung sind, wird auf sie nicht ausführlicher eingegangen.

Die Lauffläche 1 des Reifens besteht im Wesentlichen aus zwei Reihen von Stollen 2, die in Umfangsrichtung gegeneinander versetzt sind. In jeder Stollenreihe sind die Stollen 2 zueinander zumindest im Wesentlichen parallel verlaufend angeordnet und erstrecken sich vom jeweiligen Laufstreifenrand zur Laufstreifenmitte und geringfügig über diese hinaus, sodass, in Reifenumfangsrichtung betrachtet, die Endbereiche, die Stollenköpfe 2a, der Stollen 2 aus der einen Stollenreihe mit den Stollenköpfen 2a der Stollen 2 aus der anderen Stollenreihe etwas überlappen. Der Verlauf der Stollen 2 der beiden Stollenreihen ist dabei so gewählt, dass, über die gesamte Breite der Lauffläche 1 betrachtet, die Stollen 2 etwa V-förmig verlaufen. Der Winkel a im Bereich des Stollenkopfes 2a, welcher zwischen der zentralen Mittellinie des Stollens 2 und der Umfangsrichtung gemessen wird, wird in der Größenordnung von 35 bis 65°, insbesondere von 45 bis 55°, gewählt. Der Winkel β zwischen der Mittellinie und der Umfangsrichtung im Bereich jedes Laufflächenrandes beträgt in der Größenordnung von 60 bis 90°.

Jeder Stollen 2 ist mit einer in seiner Längserstreckung verlaufenden Rille 3 versehen, die bei der dargestellten Ausführungsform entlang der Mittellinie jedes Stollens 2 verläuft. Die Rillen 3 münden an den Rändern der Lauffläche 1 nach außen, im Bereich der Laufflächenmitte enden sie innerhalb der Stollen 2, sodass die Stollenköpfe 2a massiv ausgebildet bleiben. Diese Endbereiche der Rillen 3 werden insbesondere abgerundet ausgeführt. Die Rillen 3 können auch so ausgeführt werden, dass sie die Stollenköpfe 2a teilen und im Bereich der Laufflächenmitte ebenfalls nach außen münden. Die Rillen 3 werden ferner in übereinstimmenden Längen ausgeführt, wobei jede Rille 3 eine Länge aufweist, die zwischen 70 und 100%, insbesondere bis zu 95%, der Stollenlänge beträgt. Jede Rille 3 ist ferner über den Großteil ihrer Erstreckung im Stollen 2 mit einer konstanten Tiefe ausgeführt, die bis zu 80% der Profiltiefe, die dem Niveau der unstrukturierten Flächen zwischen den Stollen 2 entspricht, beträgt. Lediglich an den Laufflächenrandbereichen reicht der Rillengrund, insbesondere aus optischen Gründen, auf bzw. sogar knapp unterhalb das Niveau dieser Flächen. Es kann jedoch auch vorgesehen werden, den Rillengrund zu den geschlossenen Enden der Rillen 3 hin zu verringern.

Die Stollen 2 sind breiter ausgeführt, als es für Stollenprofile von Landwirtschaftsreifen üblich ist. Setzt man bei neuem Reifen mit noch nicht abgefahrenem Profil die Profiltiefe, die hier der Stollenhöhe h entspricht, in ein Verhältnis zur Stollenbreite b, ist zumindest entlang der Rille 3 die Stollenbreite b mindestens das Zweifache, insbesondere mindestens das 2,2- fache der Stollenhöhe h. Die Stollenbreite kann vorzugsweise bis zum 3- fachen der Stollenhöhe h betragen. Die Stollenhöhe h wird in radialer Richtung zwischen dem Niveau der Lauffläche zwischen den Stollen 2 und der mit dem Untergrund in Kontakt tretenden Oberfläche der Stollen ermittelt, die Stollenbreite b ist jeweils die Minimalbreite an der betreffenden Stelle. Die angegebenen Werte gelten bis zum Schulterbereich 2c der Stollen 2.

Bei der dargestellten Ausführungsform teilt jede Rille 3 ihren Stollen 2 etwa mittig. Die Rillen 3 können jedoch auch außermittig verlaufen. In diesem Fall sollten die Rillen 3, bezogen auf ihre Mittellinien, jeden Stollen 2 maximal im Verhältnis 30:70 bzw. 70:30, von jeder der beiden möglichen Richtungen her betrachtet, teilen. Die Breite jeder Rille 3 wird zwischen 15% und 40%, insbesondere zwischen 25 und 30%, der Breite b jedes Stollens 2 gewählt. Die Stollen 2 weisen ferner eine Breite auf, die sich geringfügig zu den Stollenköpfen 2a im Mittelbereich der Lauffläche 1 verringert. Auch die Rillen 3 werden bevorzugt so ausgeführt, dass sich ihre Breite gleichermaßen wie jene der Stollen 2 ändert. Die beiden Längsflanken jeder Rille 3 werden insbesondere unter einem vergleichsweise kleinen Winkel von 5 bis 12° zur Senkrechten (Radialen) ausgerichtet, derart, dass die Rillenbreite zum Rillengrund kontinuierlich abnimmt.

Das Anordnen von Rillen 3 innerhalb der Stollen 2 gestattet es, die Stollen 2 und somit die Lauffläche 1 des Reifens mit einem vergleichsweise hohen Positivanteil zu versehen. Wie bekannt, ist der Positivanteil jener Anteil an der Gesamtfläche einer Lauffläche, welcher beim Abrollen des Reifens mit dem Untergrund in Kontakt tritt. Nicht zum Positivanteil gehören daher die Flächenbereiche zwischen den Stollen 2 und die von den Rillen 3 eingenommenen Flächen. Bei einem erfindungsgemäß ausgestalteten Stollenprofil beträgt der Positivanteil mindestens 20%, insbesondere mindestens 30%. Erfindungsgemäß ausgestaltete Profile bzw. Laufflächen können ohne weiteres so ausgelegt werden, dass ihr Positivanteil bis zu 50% beträgt.

Mit der Erfindung lässt sich ein Stollenprofil von den Gebrauchseigenschaften her vor allem in Richtung Straßen- und Gründlandeignung verbessern, ohne die Nachteile von zu massiv ausgeführten Stollen befürchten zu müssen, wie zu starke Erwärmung bei Straßenfahren, unkomfortables Abrollen.und ungleichmäßiges Abriebsbild. Durch die Erfindung werden die ansonsten zu massiv werdenden Stollen geteilt und ihr für eine ungünstige Erwärmung hauptverantwortlicher Zentralbereich wird quasi entschärft. Durch die Rillen 3 werden mechanisch entkoppelte Stollenteile gebildet, wodurch Abrollkomfort und Abriebsverhalten verbessert werden. Die Rillen 3 bilden zudem zusätzliche Kanten, die die maximale Traktionskraft auf Grünland, wie Grasland und Weiden, verbessern, wobei jedoch die für Stollenprofile typische gute Traktion auf nachgiebigen Böden erhalten bleibt.

## Patentansprüche

1. Landwirtschaftsreifen mit einer Lauffläche mit zwei Reihen von Stollen (2), die schräg zur Umfangsrichtung, in zwei Reihen und zumindest im Wesentlichen V-förmig angeordnet sind und sich vom jeweiligen Laufflächenrand zumindest im Wesentlichen bis zur Laufflächenmitte erstrecken,
**dadurch gekennzeichnet,**
**dass** in jedem Stollen (2) eine vom Bereich des Stollenkopfes (2a) bis zum Laufflächenrand durchgehend verlaufende Rille (3) ausgebildet ist, wobei entlang der Rille (3) die Stollenbreite (b) zumindest dem Zweifachen der Stollenhöhe (h) entspricht.

2. Landwirtschaftsreifen nach Anspruch 1, **dadurch gekennzeichnet, dass** die Stollenbreite (b) zumindest dem 2,2- fachen der Stollenhöhe (h) entspricht.

3. Landwirtschaftsreifen nach Anspruch 1 oder 2, **dadurch gekennzeichnet, dass** die Stollenbreite (b) bis zum 3- fachen der Stollenhöhe (h) entspricht.

4. Landwirtschaftsreifen nach einem der Ansprüche 1 bis 4, **dadurch gekennzeichnet, dass** der Positivanteil der Lauffläche zwischen 20 und 50%, insbesondere mindestens 30%, beträgt.

5. Landwirtschaftsreifen nach einem der Ansprüche 1 bis 4, **dadurch gekennzeichnet, dass** die Rillen (3) an den Laufstreifenrändem nach außen münden.

6. Landwirtschaftsreifen nach einem der Ansprüche 1 bis 5, **dadurch gekennzeichnet, dass** die Länge der Rillen (3) zwischen 70 und 100%, insbesondere bis zu 95%, der Stollenlänge beträgt.

7. Landwirtschaftsreifen nach einem der Ansprüche 1 bis 6, **dadurch gekennzeichnet, dass** die Rillen (3) entlang der zentralen Mittellinien der Stollen (2) verlaufen.

8. Landwirtschaftsreifen nach einem der Ansprüche 1 bis 6, **dadurch gekennzeichnet, dass** die Mittellinien der Rillen (3) den jeweiligen Stollen (2) über seine Breite in einem Verhältnis von 30:70 bis 70:30 teilen.

9. Landwirtschaftsreifen nach einem der Ansprüche 1 bis 8, **dadurch gekennzeichnet, dass** die Rillen (3) eine Breite aufweisen, die zwischen 15 und 40%, insbesondere zwischen 20 und 30%, der Breite (b) der Stollen (2) beträgt.

10. Landwirtschaftsreifen nach einem der Ansprüche 1 bis 9, **dadurch gekennzeichnet, dass** die Breite der Rillen (3) mit einer Breitenänderung der Stollen (2) gleichermaßen mitvariiert wird.

11. Landwirtschaftsreifen nach einem der Ansprüche 1 bis 10, **dadurch gekennzeichnet, dass** die Rillen (3) eine insbesondere über den Großteil ihrer Länge zumindest im Wesentlichen konstante Tiefe aufweisen, die bis zu 80% der Stollenhöhe beträgt.

## Claims

1. Agricultural tyre having a tread surface with two rows of cleats (2) which are disposed at an angle to the circumferential direction, in two rows and at least substantially in a V-shape and which extend from the respective edge of the tread surface at least substantially to the centre of the tread surface,
**characterised in that**
in each cleat (2) is formed a groove (3) which extends continuously from the region of the cleat head (2a) up to the edge of the tread surface, the cleat width( b) along the groove (3) corresponding to at least twice the cleat height (h).

2. Agricultural tyre according to claim 1, **characterised in that** that the cleat width (b) corresponds to at least 2.2 times the cleat height (h).

3. Agricultural tyre according to claim 1 or 2, **characterised in that** the cleat width (b) corresponds to 3 times the cleat height (h).

4. Agricultural tyre according to one of claims 1 to 4, **characterised in that** the positive portion of the tread surface is between 20 and 50%, especially at least 30%.

5. Agricultural tyre according to one of claims 1 to 4, **characterised in that** the grooves (3) open outwards at the tread strip edges.

6. Agricultural tyre according to one of claims 1 to 5, **characterised in that** the length of the grooves (3) is between 70 and 100%, especially up to 95%, of the cleat length.

7. Agricultural tyre according to one of claims 1 to 6, **characterised in that** the grooves (3) extend along the central centre lines of the cleats (2).

8. Agricultural tyre according to one of claims 1 to 6, **characterised in that** the centre lines of the grooves (3) divide the respective cleat (2) over its width in a ratio of 30:70 to 70:30.

9. Agricultural tyre according to one of claims 1 to 8, **characterised in that** the grooves (3) have a width which is between 15 and 40%, especially between 20 and 30%, of the width (b) of the cleats (2).

10. Agricultural tyre according to one of claims 1 to 9, **characterised in that**, when there is an alteration in the width of the cleats (2), the width of the grooves (3) is also varied to the same extent.

11. Agricultural tyre according to one of claims 1 to 10, **characterised in that** the grooves (3) have, especially over most of their length, an at least substantially constant depth, which is up to 80% of the cleat height.

## Revendications

1. Bandage pneumatique agricole comprenant une bande de roulement comportant deux rangées de crampons (2) qui, de manière oblique par rapport à la direction circonférentielle, sont disposés en deux rangées et au moins en ayant une forme pratiquement en V, et s'étendent depuis le bord respectif de la bande de roulement, au moins pratiquement jusqu'au milieu de la bande de roulement,
**caractérisé**
**en ce que**, dans chaque crampon (2), est configurée une rainure (3) s'étendant de façon continue depuis la zone de la tête (2a) du crampon jusqu'au bord de la bande de roulement, où, le long de la rainure (3), la largeur (b) du crampon correspond au moins au double de la hauteur (h) du crampon.

2. Bandage pneumatique agricole selon la revendication 1, **caractérisé en ce que** la largeur (b) du crampon correspond au moins à 2,2 fois la hauteur (h) du crampon.

3. Bandage pneumatique agricole selon la revendication 1 ou 2, **caractérisé en ce que** la largeur (b) du crampon correspond à une valeur allant jusqu'à 3 fois la hauteur (h) du crampon.

4. Bandage pneumatique agricole selon l'une quelconque des revendications 1 à 4, **caractérisé en ce que** la partie positive de la bande de roulement est comprise entre 20 % et 50 %, en particulier au moins égale à 30 %.

5. Bandage pneumatique agricole selon l'une quelconque des revendications 1 à 4, **caractérisé en ce que** les rainures (3) débouchent vers l'extérieur, au niveau des bords de la bande de roulement.

6. Bandage pneumatique agricole selon l'une quelconque des revendications 1 à 5, **caractérisé en ce que** la longueur des rainures (3) est égale à une valeur comprise entre 70 % et 100 %, en particulier allant jusqu'à 95 % de la longueur des crampons.

7. Bandage pneumatique agricole selon l'une quelconque des revendications 1 à 6, **caractérisé en ce que** les rainures (3) s'étendent le long des lignes médianes centrales des crampons (2).

8. Bandage pneumatique agricole selon l'une quelconque des revendications 1 à 6, **caractérisé en ce que** les lignes médianes des rainures (3) partagent le crampon respectif (2), sur sa largeur, suivant un rapport variant entre 30:70 et 70:30.

9. Bandage pneumatique agricole selon l'une quelconque des revendications 1 à 8, **caractérisé en ce que** les rainures (3) présentent une largeur qui est égale à une valeur comprise entre 15 % et 40 %, en particulier entre 20 % et 30 % de la largeur (b) des crampons (2).

10. Bandage pneumatique agricole selon l'une quelconque des revendications 1 à 9, **caractérisé en ce que** la largeur des rainures (3) est modifiée en même temps qu'une modification de largeur des crampons (2), et ce, de façon identique.

11. Bandage pneumatique agricole selon l'une quelconque des revendications 1 à 10, **caractérisé en ce que** les rainures (3) présentent une profondeur au moins pratiquement constante, en particulier sur la majeure partie de leur longueur, laquelle profondeur est égale à une valeur allant jusqu'à 80 % de la hauteur des crampons.
